(19) Europäisches Patentamt
European Patent Office
Office européen des brevets

(11) **EP 2 917 293 B1**

(12) **EUROPEAN PATENT SPECIFICATION**

(45) Date of publication and mention
of the grant of the patent:
**15.11.2017 Bulletin 2017/46**

(21) Application number: **13776618.4**

(22) Date of filing: **24.09.2013**

(51) Int Cl.:
***C09D 5/44*** *(2006.01)*

(86) International application number:
**PCT/US2013/061399**

(87) International publication number:
**WO 2014/074234 (15.05.2014 Gazette 2014/20)**

(54) **METHOD FOR IMPROVING COATING CURE FOR ARTICLE COATED IN PHOSPHATE-CONTAMINATED ELECTROCOAT COATING COMPOSITION AND ELECTROCOAT COATING COMPOSITION**

VERFAHREN ZUR VERBESSERUNG EINER BESCHICHTUNGSHÄRTUNG FÜR EINEN IN EINER PHOSPHATKONTAMINIERTEN ELEKTROBESCHICHTUNGSZUSAMMENSETZUNG BESCHICHTETEN ARTIKEL UND ELEKTROBESCHICHTUNGSZUSAMMENSETZUNG

PROCÉDÉ POUR AMÉLIORER LE DURCISSEMENT D'UN REVÊTEMENT POUR UN ARTICLE REVÊTU DANS UNE COMPOSITION DE REVÊTEMENT PAR ÉLECTRODÉPOSITION CONTAMINÉE PAR DU PHOSPHATE ET COMPOSITION DE REVÊTEMENT PAR ÉLECTRODÉPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2012 US 201261724541 P**

(43) Date of publication of application:
**16.09.2015 Bulletin 2015/38**

(73) Proprietor: **BASF Coatings GmbH**
**48165 Münster (DE)**

(72) Inventors:
- **SCHILLER, Robert D.**
  **South Lyon, Michigan 48178 (US)**
- **SCHOCK, Kevin M.**
  **Dearborn, Michigan 48124 (US)**

(74) Representative: **BASF IP Association**
**BASF SE**
**G-FLP-C006**
**67056 Ludwigshafen (DE)**

(56) References cited:
**EP-A1- 1 420 086     WO-A1-2006/058782**
**WO-A2-00/39177**

**Description**

FIELD OF THE INVENTION

The invention concerns organic electrocoat coating compositions and methods, particularly those that are part of a coating process that includes a phosphate pretreatment of a metal article before the article is electrocoated.

INTRODUCTION

This section provides information helpful in understanding the invention but that is not necessarily prior art.

Industrial coating of metal articles that will be used in corrosive environments may include application of one or more inorganic and organic treatments and coatings. Painting systems ("paint shops") in automotive assembly plants are large, complex, and expensive. Metal automotive vehicle bodies (the "body-in-white") and parts, for instance, are given a many-step treatment including cleaning in one or more cleaning baths or spray tanks, application of an aqueous phosphate coating material as a metal pretreatment step in a phosphating bath, then various rinses and additional finishing treatments. Such a treatment is described in Claffey, U.S. Patent No. 5,868,820, for example. The phosphating pre-treatment steps are undertaken to improve corrosion resistance of the metal and adhesion of subsequent coatings to the metal.

An electrodeposition coating ("electrocoat") is applied after the pretreatment steps to the metal vehicle body. Electrocoat baths usually comprise an aqueous dispersion or emulsion of a principal film-forming resin having ionic stabilization in water or a mixture of water and organic cosolvent. In automotive or industrial applications for which durable films are desired, the electrocoat compositions are formulated to be curable (thermosetting) compositions. This is usually accomplished by emulsifying with the principal film-forming resin a crosslinking agent that can react with functional groups on the principal resin under appropriate conditions, such as with the application of heat, and so cure the coating. Typical electrocoat coating compositions for coating automotive vehicle bodies and parts contain epoxy resin as the principle resin and blocked polyisocyanate as the crosslinker. During electrodeposition, coating material containing the ionically-charged resin having a relatively low molecular weight is deposited onto a conductive substrate by submerging the substrate in the electrocoat bath and then applying an electrical potential between the substrate and a pole of opposite charge, for example, a stainless steel electrode. The charged coating material migrates to and deposits on the conductive substrate. The coated substrate is then heated to cure or crosslink the coating. These electrocoat coating compositions further include a catalyst for the curing reaction between the epoxy resin and the polyisocyanate to make it possible to cure the deposited coating in a time and at a temperature that are commercially reasonable.

The movement of articles through the phosphating pretreatment and then through the electrocoat bath brings small amounts of material from the phosphating steps into the electrocoat coating bath. Over time, the concentration of phosphate ions in the electrocoat coating composition increases to a point at which the phosphate ions interfere with the action of the catalyst in catalyzing the cure reaction. While the phosphate ion has a small effect on tin catalysts, it has a marked effect on bismuth catalysts. Bismuth catalysts are now extensively used in automotive OEM electrocoating operations, however, because of their high activity and low toxicity as compared with tin compounds.

In response to the interference of the phosphate ion with cure when it reaches a concentration of about 100 ppm on total electrocoat coating composition weight, manufacturers have added more pigment paste, which contains the bismuth catalyst, or have scrapped a large portion of the contaminated bath, replacing it with fresh electrocoat coating composition. Both actions are undesirable: increased pigment levels lead to a rough appearance, filter loading, and poor ultrafiltration performance, and replacing a major portion of the bath with fresh material is time consuming and very expensive.

Yasuoka et al, US Patent No. 5,330,839 describes a blocked isocyanate group-containing electrocoating composition comprising at least one dialkyltin aromatic carboxylate and at least one bismuth or zirconium compound as a combined curing catalyst. Hiraki et al., EP 1 046 683 describes a cationically electrodepositable paint having very low organic solvent content. The paint includes a corrosion preventative pigment that may be selected from a variety of metal compounds. Organic tin compounds can be added. Kawaraya et al., US Patent No. 7,625,477 describes an electrodeposition paint comprising particles of at least one metallic compound selected from bismuth hydroxide, zirconium compound and tungsten compound which is said to excel in corrosion restistance. Organotin compounds may be included.

WO 2006/058782 A1 relates to a dark flat element, preferably a plastic, lacquer coating or fiber material, having reduced density, low heat conductivity and low solar absorption. Zirconiums silicate particles are mentioned as a part of a carrier material having a specific reflexion in a specific wavelength range.

EP 1 420 086 A1 relates to a process for electrocoating. Therein it is disclosed to use zirconium silicate in a silicate medium which is applied to a substrate to form a silicate layer before electrolytically applying a synthetic resin layer.

WO 00/39177 discloses a silane treatment for electrocoated metal to provide corrosion resistance, as well as improved adhesion to electrocoats and other polymers.

SUMMARY OF THE DISCLOSURE

This section provides a general summary of the disclosure and is not comprehensive of its full scope or all of the disclosed features.

Disclosed is a method of treating an electrocoat coating composition contaminated with phosphate ions by adding zirconium silicate to the electrocoat coating composition to improve cure response by preferentially reacting with phosphate ions in the coating composition rather than the phosphate ions reacting with the metal compound catalyst. In various embodiments, the method may include determining a concentration of phosphate ions in the coating composition and, if the concentration of phosphate ions in the coating composition is above about 50 ppm, preferably above about 100 ppm, based on total weight of the electrocoat coating composition ("bath"), adding zirconium silicate to the coating composition to improve cure response of the coating composition. A reduction in cure response of coatings electrodeposited from the bath may be observed, then the concentration of phosphate ions in the bath determined and zirconium silicate added in response to a measured concentration of the phosphate ions.

Also disclosed is an aqueous coating composition having a cathodically electrodepositable binder. The binder has a principal resin and a blocked polyisocyanate crosslinker capable of reacting with the principal resin during cure. The coating composition is made by including zirconium silicate and a catalyst consisting essentially of bismuth compounds and mixtures of bismuth compounds. The aqueous coating composition provides the advantages of a bismuth catalyst while being protected against the poisoning effect of phosphate ions on the bismuth catalyst during cure of a coating electrodeposited from the coating composition.

Further disclosed is an aqueous coating composition again having a cathodically electrodepositable binder, the binder having a principal resin and a blocked polyisocyanate crosslinker, in which the coating composition includes zirconium silicate and at least one bismuth compound other than bismuth hydroxide. The coating composition is free of tin compounds and free of bismuth hydroxide.

Still further disclosed is a method of coating an electrically conductive substrate, such as a metal automotive body or part, by placing the electrically conductive substrate in one of the aqueous coating compositions described above. The substrate is attached as one electrode and there a second electrode is provided in the aqueous electrocoat coating composition, then a current is passed through the aqueous coating composition to deposit a coating layer onto the electrically conductive substrate. In certain embodiments of the method, the binder is cathodically electrodepositable and the electrically conductive substrate is attached as a cathode when the current is passed through the aqueous coating composition. The deposited coating layer may then be cured to a cured coating layer. During curing, the polyisocyanate crosslinker reacts with the principal resin to form a crosslinked binder in the cured coating layer, a reaction that catalyzed by the bismuth compound or compounds. Subsequent coating layers may be applied on the electrodeposited coating layer, and the layers may be cured individually as each is applied or two or more layers may be cured together. For example, the electrodeposited coating layer may be a primer layer and other layers such as an optional spray-applied primer surfacer and a topcoat layer or topcoat layers (e.g., a colored basecoat layer and a clearcoat layer) may be applied over the electrodeposited coating layer. All coating layers may be cured together, or the electrodeposited coating layer and primer layer, may be cured together or individually and the topcoat layer or topcoat layers cured together (if more than one topcoat layer) or individually.

"A," "an," "the," "at least one," and "one or more" are used interchangeably to indicate that at least one of the item is present; a plurality of such items may be present unless the context clearly indicates otherwise. All numerical values of parameters (e.g., of quantities or conditions) in this specification, including the appended claims, are to be understood as being modified in all instances by the term "about" whether or not "about" actually appears before the numerical value. "About" indicates that the stated numerical value allows some slight imprecision (with some approach to exactness in the value; approximately or reasonably close to the value; nearly). If the imprecision provided by "about" is not otherwise understood in the art with this ordinary meaning, then "about" as used herein indicates at least variations that may arise from ordinary methods of measuring and using such parameters. In addition, disclosure of ranges includes disclosure of all values and further divided ranges within the entire range. Each value within a range and the endpoints of a range are hereby all disclosed as separate embodiment. In this description of the invention, for convenience, "polymer" and "resin" are used interchangeably to encompass resin, oligomer, and polymer. "Binder" refers to the film-forming components of the coating composition.

Further areas of applicability will become apparent from the description provided herein. It should be understood that the description and specific examples are intended for purposes of illustration only and are not intended to limit the scope of the present disclosure.

DETAILED DESCRIPTION AND DISCLOSURE OF PREFERRED EMBODIMENTS

An electrodeposition or electrocoat coating composition contaminated with phosphate ions is treated by adding zirconium silicate to the coating composition to prevent the phosphate ions from interfering with cure of a coating electrodeposited from the coating composition.

The zirconium silicate may be added in an aqueous dispersion in which the zirconium silicate is dispersed with a dispersant or with a dispersing resin (also known as a grinding resin). Suitable, nonlimiting examples of dispersants or dispersing resins that may be used include those described in Carpenter et al., U.S. Patents No. 5527614 and 5536776; Rueter et al., U.S. Patent No. 6,951,602; Hsieh et al., U.S. Patent No. 6,288,176; Hönig et al, U.S. Patent No. 6,174,422; Zawacky et al., U.S. Patent Application Publication No. 2011/0005937; and Geist et al., U.S. Patent No. 4,769,400. As disclosed in these references and in other publications in the art, useful dispersants and dispersing resins for cathodic electrodeposition coating compostions may be nonionic or cationic. If used, cationic dispersants or dispersing resins may be at least partially salted with an acid compatible with the electrocoat composition into which the zirconium dispersion will be added, including the same acid or acids used to salt the cationic binder resin of the electrocoat coating composition.

The zirconium silicate dispersion may be made by combining the dispersant or dispersing resin with the zirconium silicate, water, and, if necessary, salting acid to form a slurry. The slurry may optionally include further resins, organic solvents, further solids such as fillers or pigments, and any customary additives, such as, for example, defoamers or wetting agents. The zirconium silicate may typically have a primary particle size in a range of from about 1 μm to about 10 μm. The slurry is generally subjected to mechanical shear to break apart solid particle agglomerates (e.g., agglomerates of zirconium silicate, optional pigments, optional fillers) and to wet the solid particle surfaces with the dispersant or dispersing resin, both to stabilize the dispersion and the prevent re-agglomeration of the particles. The concentration of zirconium silicate in the dispersion may vary widely, depending on factors such as the particular dispersants or dispersing resins used and in what concentrations, which fillers or pigments are included, if any, and in what concentrations, the nature of any additives, and the dispersion process chosen. Typically, the slurry may be processed in an attritor, two-roll mill, or media mill such as a sandmill, ball mill, or pebble mill until the solid particles reach a desired particle size.

In a preferred embodiment the zirconium silicate is included in a dispersion containing one or more pigments or one or more fillers. Conventional pigments for electrocoat primers may also be incorporated into the electrocoat coating composition; nonlimiting examples of such pigments include corrosion-inhibiting pigments, colorants, extenders, conductive pigments, and magnetically shielding pigments. Specific nonlimiting examples of suitable pigments and fillers include titanium dioxide, iron oxides, carbon black, magnesium silicate, aluminum silicate, barium sulfate, aluminum phosphomolybdate, strontium chromate, basic lead silicate, lead chromate, other anti-corrosion pigments, clay, bismuth oxide, vanadium oxide, manganese oxide, cobalt oxide, zinc oxide, strontium oxide, yttrium oxide, molybdenum oxide, zirconium oxide, lanthanum oxide, oxides of the lanthanide series of elements, and organic pigments such as metallized and non-metallized azo pigments such as lithol reds, rubine reds, and naphthol reds, oranges, and browns; quinacridone reds and violets, perylene reds, copper phthalocyanine blues and greens, carbazole violet, monoarylide and diarylide yellows, benzimidazolone yellows, tolyl orange, naphthol orange, and rhodamine pigments. The pigment-to-resin weight ratio in the electrocoat bath can be important and should be preferably less than 50:100, more preferably less than 40:100, and usually about 10 to 30:100. In this ratio, "pigment" includes all dispersed solids, including not only color pigments but also the zirconium silicate and any filler particles included in the bath. Higher pigment-to-resin solids weight ratios have been found to adversely affect coalescence and flow. Usually, the total amount of pigment and other solid particles is 10-40 percent by weight of the nonvolatile material in the bath. In some embodiments, the total amount of pigment and other solid particles is 15 to 30 percent by weight of the nonvolatile material in the bath.

The zirconium silicate dispersion may include a combination of pigments that may be added to the electrocoat coating composition at regular intervals as needed to maintain a desired pigment concentration in the bath regardless of the coating cure response or phosphate ion concentration. The pigment dispersion containing zirconium silicate may be added as is customer for such pigment feeds when the pigment concentration in the electrocoat coating composition is depleted due to plating of materials from the coating composition. The pigment-to-binder weight ratio in the electrocoat bath should usually be about 10 to 30 parts by weight pigment :100 parts by weight binder. Usually, the pigment is about 10-40 percent by weight of the nonvolatile material in the bath. Preferably, the pigment is about 15 to 30 percent by weight of the nonvolatile material in the bath.

In various embodiments, the electrodeposition coating composition is treated by adding the zirconium silicate to the coating composition to overcome the effect on the cure catalyst of phosphate ions that enter it from the phosphate pretreatment process. For example, the concentration of phosphate ions in the coating composition can be monitored and the coating composition can be treated with the zirconium silicate when the concentration of phosphate ions in the coating composition is about 100 ppm or higher based on total bath weight. In one method, the zirconium silicate can be added to the coating composition after a decrease in extent of curing of the coating plated from the bath has been observed and, optionally, it has been determined that the concentration of phosphate ions in the coating composition is about 100 ppm or higher based on total bath weight. In another method, zirconium silicate can be included in the bath as a prophylactic measure before any decrease in extent of cure is observed. The concentration of phosphate ions in the coating composition may be determined using an Inductively Coupled Argon Plasma Optical Emission Spectrometer ("ICP" or "ICAP-OES").

Introduction of phosphate anions into the electrocoat coating composition interferes with the metal compound catalyst, particularly when the catalyst is a bismuth compound or a combination of bismuth compounds, but phosphate ions can also interfere with curing of the coating when the catalyst is a tin compound or other metal compound. While not wishing to be bound by theory, the zirconium silicate does not appear to act as a curing catalyst itself, but instead preferentially interacts or reacts with the phosphate anions to prevent their interference with the bismuth, tin, or other metal compound catalyst.

Also disclosed is an aqueous coating composition having a cathodically electrodepositable binder. The binder has a resin with isocyanate-reactive functional groups and a blocked polyisocyanate crosslinker, capable of reacting with the principal resin during cure. The coating composition further includes zirconium silicate and a catalyst consisting essentially of bismuth compounds and mixtures of bismuth compounds.

In general, an electrodeposition coating composition binder includes a resin that has isocyanate-reactive functional groups and that is electrodepositable. A variety of such resins are known, including without limitation, epoxy resins, polyesters, polyurethanes, and vinyl resins such as polyacrylate resins, and polybutadiene resins. Many electrocoating applications, including automotive applications, typically use an electrodepositable resin that is cathodic, i.e., it has salted basic groups (e.g., primary, secondary, or tertiary amine groups) or quaternary groups (e.g., ammonium, sulfonium, or phosphonium groups). In a cathodic electrocoating process, the article to be coated is the cathode.

In a preferred embodiment, the resin is an epoxy resin with amine groups. Amino-epoxy resins may be prepared from resins having a plurality of epoxide groups, which may be reacted with one or more than polyfunctional, preferably difunctional, extender compounds and with one or more amine compounds. Nonlimiting examples of resins with a plurality of epoxide groups include diglycidyl aromatic compounds such as the diglycidyl ethers of polyhydric phenols such as 2,2-bis(4-hydroxyphenyl)propane (bisphenol A), 2,2-bis(4-hydroxy-3-methylphenyl)propane, 4,4'-dihydroxybenzophenone, dihydroxyacetophenones, 1,1-bis(4hydroxyphenylene)ethane, bis(4-hydroxyphenyl) methane, 1,1-bis(4-hydroxyphenyl)isobutane, 2,2-bis(4-hydroxy-tert-butylphenyl) propane, 1,4-bis(2-hydroxyethyl)piperazine, 2-methyl-1,1-bis(4-hydroxyphenyl)propane, bis-(2-hydroxynaphthyl)methane, 1,5-dihydroxy-3-naphthalene, and other dihydroxynaphthylenes, catechol, resorcinol, and the like, including diglycidyl ethers of bisphenol A and bisphenol A-based resins. Also suitable are the diglycidyl ethers of aliphatic diols, including the diglycidyl ethers of 1,4- butanediol, cyclohexanedimethanols, ethylene glycol, propylene glycol, diethylene glycol, dipropylene glycol, triethylene glycol, tripropylene glycol, polypropylene glycol, polyethylene glycol, poly(tetrahydrofuran), 1,3-propanediol, 2,2,4-trimethyl-1,3-pentanediol, 1,6-hexanediol, 2,2-bis(4-hydroxycyclohexyl) propane, and the like. Diglycidyl esters of dicarboxylic acids can also be used as polyepoxides. Specific examples of compounds include the diglycidyl esters of oxalic acid, cyclohexanediacetic acids, cylcohexanedicarboxylic acids, succinic acid, glutaric acid, phthalic acid, terephthalic acid, isophthalic acid, naphthalene dicarboxylic acids, and the like. A polyglycidyl reactant may be used, preferably in a minor amount in combination with diepoxide reactant. Novolac epoxies may be used as a polyepoxide-functional reactant. The novolac epoxy resin may be selected from epoxy phenol novolac resins or epoxy cresol novolac resins. Other suitable higher-functionality polyepoxides are glycidyl ethers and esters of triols and higher polyols such as the triglycidyl ethers of trimethylolpropane, trimethylolethane, 2,6-bis(hydroxymethyl)-p-cresol, and glycerol; tricarboxylic acids or polycarboxylic acids. Also useful as polyepoxides are epoxidized alkenes such as cyclohexene oxides and epoxidized fatty acids and fatty acid derivatives such as epoxidized soybean oil. Other useful polyepoxides include, without limitation, polyepoxide polymers such as acrylic, polyester, polyether, and epoxy resins and polymers, and epoxy-modified polybutadiene, polyisoprene, acrylobutadiene nitrile copolymer, or other epoxy-modified rubber-based polymers that have a plurality of epoxide groups.

It may also be advantageous to extend the epoxy resin by reacting an excess of epoxide group equivalents with a modifying material, such as a polyol, a polyamine or a polycarboxylic acid, in order to improve the film properties. Useful epoxy resins of this kind have a weight average molecular weight, which can be determined by GPC, of from about 3000 to about 6000. Epoxy equivalent weights can range from about 200 to about 2500, and are preferably from about 500 to about 1500. Suitable, nonlimiting examples of extender compounds include polycarboxylic acids, polyols, polyphenols, and amines having two or more amino hydrogens, especially dicarboxylic acids, diols, diphenols, and diamines. Particular, nonlimiting examples of suitable extenders include diphenols, diols, and diacids, polycaprolactone diols, and ethoxylated bisphenol A resins such as those available from BASF Corporation under the trademark MACOL®. Other suitable extenders include, without limitation, carboxy- or amine-functional acrylic, polyester, polyether, and epoxy resins and polymers. Still other suitable extenders include, without limitation, polyamines, including diamines such as ethylenediamine, diethylenetriamine, triethylenetetramine, dimethylaminopropylamine, dimethylaminobutylamine, diethylaminopropylamine, diethylaminobutylamine, dipropylamine, and piperizines such as 1-(2-aminoethyl)piperazine, polyalkylenepolyamines such as triethylenetetramine, tetraethylenepentamine, pentaethylenehexamine, tripropylenetetramine, tetrapropylenepentamine, pentapropylenehexamine, N,N'-bis(3-aminopropyl)ethylenediamine, N-(2-hydroxyethyl) propane-1,3-diamine, and polyoxyalkylene amines such as those available from BASF AG under the trademark POLYAMIN® or from Huntsman under the trademark JEFFAMINE®. The product of the reaction of polyepoxide and extender will be epoxide-functional when excess equivalents of polyepoxide are reacted or will have the functionality of the extender when excess equivalents of extender are used. A monofunctional reactant may optionally be reacted with the polyepoxide resin and the extender or after reaction of the polyepoxide with the extender to prepare the epoxy resin. Suitable, nonlimiting examples of monofunctional reactants include phenol, alkylphenols such as nonylphenol and dodecylphenol, other monofunctional, epoxide-reactive compounds such as dimethylethanolamine and monoepoxides such as the glycidyl ether of phenol, the glycidyl ether of nonylphenol, or the glycidyl ether of cresol, and dimer fatty acid.

Useful catalysts for the reaction of the polyepoxide resin with the extender and optional monofunctional reactant and for the reaction of an epoxide group of the resin with an aliphatic amine group of a compound with an tridentate amine ligand include any that activate an oxirane ring, such as tertiary amines or quaternary ammonium salts (e.g., benzyldimethylamine, dimethylaminocyclohexane, triethylamine, N-methylimidazole, tetramethyl ammonium bromide, and tetrabutyl ammonium hydroxide.), tin and/or phosphorous complex salts (e.g., $(CH_3)_3SnI$, $(CH_3)_4PI$, triphenylphosphine, ethyltriphenyl phosphonium iodide, tetrabutyl phosphonium iodide) and so on. It is known in the art that tertiary amine catalysts may be preferred with some reactants. The reaction may be carried out at a temperature of from about 100°C. to about 350°C. (in other embodiments 160°C to 250°C.) in solvent or neat. Suitable solvents include, without limitation, inert organic solvent such as a ketone, including methyl isobutyl ketone and methyl amyl ketone, aromatic solvents such as toluene, xylene, Aromatic 100, and Aromatic 150, and esters, such as butyl acetate, n-propyl acetate, hexyl acetate.

Amino groups can be incorporated by reacting the polyglycidyl ethers of the polyphenols with amine or polyamines, such as by reaction of the polyepoxide resin with an extender having a tertiary amine group or by reaction with a monofunctional reactant having an amine group. Suitable, nonlimiting examples of extenders and monofunctional reactants having an amine group that may be used include diethanolamine, dipropanolamine, diisopropanolamine, dibutanolamine, diisobutanolamine, diglycolamine, methylethanolamine, dimethylaminopropylamine, diethylaminopropylamine, dimethylaminoethylamine, N-aminoethylpiperazine, aminopropylmorpholine, tetramethyldipropylenetriamine, methylamine, ethylamine, dimethylamine, dibutylamine, ethylenediamine, diethylenetriamine, triethylenetetramine, dimethylaminobutylamine, diethylaminopropylamine, diethylaminobutylamine, dipropylamine, methylbutylamine, methylethanolamine, aminoethylethanolamine, aminopropylmonomethylethanolamine, polyoxyalkylene amines, and compounds having a primary amine group that has been protected by forming a ketimine. Quarternary ammonium groups may be incorporated, and are formed, for example, from a tertiary amine by salting it with an acid, then reacting the salting hydrogen with, e.g., a compound bearing an epoxide group to produce an ammonium group.

In a preferred embodiment, the epoxide groups on the epoxy resin are reacted with a compound comprising a secondary amine group and at least one latent primary amine. The latent primary amine group is preferably a ketimine group. The primary amines are regenerated when the resin is emulsified.

The resin may have an amine equivalent weight of about 300 to about 3000, and more preferably of about 850 to about 1300.

Epoxy-modified novolacs can be used as a resin in the binder. The epoxy-novolac resin can be capped in the same way as previously described for the epoxy resin.

Cationic polyurethanes and polyesters may also be used. Such materials may be prepared by endcapping with, for example, an aminoalcohol or, in the case of the polyurethane, the same compound comprising a saltable amine group previously described may also be useful.

Polybutadiene, polyisoprene, or other epoxy-modified rubber-based polymers can be used as the resin in the present invention. The epoxy-rubber can be capped with a compound comprising a saltable amine group.

Cationic acrylic resins may be used. Acrylic polymers may be made cathodic by incorporation of amino-containing monomers, such as acrylamide, methacrylamide, N,N'-dimethylaminoethyl methacrylate tert-butylaminoethyl methacrylate. 2-vinylpyridine, 4-vinylpyridine, vinylpyrrolidine or other such amino monomers. Alternatively, epoxy groups may be incorporated by including an epoxy-functional monomer in the polymerization reaction. Such epoxy-functional acrylic polymers may be made cathodic by reaction of the epoxy groups with amines according to the methods previously described for the epoxy resins. The polymerization may also include a hydroxyl-functional monomer. Useful hydroxyl-functional ethylenically unsaturated monomers include, without limitation, hydroxyethyl methacrylate, hydroxyethyl acrylate, hydroxypropyl acrylate, hydroxypropyl methacrylate, hydroxybutyl acrylate, hydroxybutyl methacrylate, the reaction product of methacrylic acid with styrene oxide, and so on. Preferred hydroxyl monomers are methacrylic or acrylic acid esters in which the hydroxyl-bearing alcohol portion of the compound is a linear or branched hydroxy alkyl moiety having from 1 to about 8 carbon atoms.

The monomer bearing the hydroxyl group and the monomer bearing the group for salting (amine for a cationic group or acid or anhydride for anionic group) may be polymerized with one or more other ethylenically unsaturated monomers. Such monomers for copolymerization are known in the art. Illustrative examples include, without limitation, alkyl esters of acrylic or methacrylic acid, e.g., methyl methacrylate, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, t-butyl acrylate, t-butyl methacrylate, amyl acrylate, amyl methacrylate, isoamyl acrylate, isoamyl methacrylate, hexyl acrylate, hexyl methacrylate, 2-ethylhexyl acrylate, decyl acrylate, decyl methacrylate, isodecyl acrylate, isodecyl methacrylate, dodecyl acrylate, dodecyl methacrylate, cyclohexyl acrylate, cyclohexyl methacrylate, substituted cyclohexyl acrylates and methacrylates, 3,5,5-trimethylhexyl acrylate, 3,5,5-trimethylhexyl methacrylate, the corresponding esters of maleic, fumaric, crotonic, isocrotonic, vinylacetic, and itaconic acids, and the like; and vinyl monomers such as styrene, t-butyl styrene, alpha-methyl styrene, vinyl toluene and the like. Other useful polymerizable co-monomers include, for example, alkoxyethyl acrylates and methacrylates, acryloxy acrylates and methacrylates, and compounds such as acrylonitrile, methacrylonitrile, acrolein, and methacrolein. Combinations of these are usually employed.

The molecular weight of a typical acrylic resin is usually in the range from about 2000 to about 50,000, and preferably from about 3000 to about 15,000.

The amino equivalent weight of the cationic resin can range from about 150 to about 5000, and preferably from about 500 to about 2000. The hydroxyl equivalent weight of the resins, if they have hydroxyl groups, is generally between about 150 and about 2000, and preferably about 200 to about 800.

The resin can be emulsified in water in the presence of a salting compound. When the resin has basic groups, such as amine groups, the resin is salted with an acid; when the resin has acid groups, the resin is salted with a base. Usually, the principal resin and the crosslinking agent are blended together before the resins are dispersed in the water. Examples of suitable neutralizing agents for the potentially cationic groups are organic and inorganic acids such as sulfuric acid, hydrochloric acid, phosphoric acid, formic acid, acetic acid, lactic acid, dimethylolpropionic acid, citric acid or sulfonic acids, such as amidosulfonic acids and alkanesulfonic acids, such as methanesulfonic acid, for example, more particularly formic acid, acetic acid or lactic acid. The acid is used in an amount sufficient to neutralize enough of the amine groups of the principal resin to impart water-dispersibility to the resin. The resin may be fully neutralized; however, partial neutralization is usually sufficient to impart the required water-dispersibility. "Partial neutralization" means that at least one, but less than all, of the saltable groups on the resin are neutralized. By saying that the resin is at least partially neutralized, it is meant that at least one of the saltable groups on the resin is neutralized, and up to all of such groups may be neutralized. The degree of neutralization that is required to afford the requisite water-dispersibility for a particular resin will depend upon its chemical composition, molecular weight, and other such factors and can readily be determined by one of ordinary skill in the art through straightforward experimentation.

The saltable resin may be combined with an isocyanate crosslinking agent before being dispersed in water. The crosslinking agents are preferably selected from the group consisting of blocked polyisocyanates. Nonlimiting examples of aromatic, aliphatic or cycloaliphatic polyisocyanates include diphenylmethane-4,4'-diisocyanate (MDI), 2,4- or 2,6-toluene diisocyanate (TDI), p-phenylene diisocyanate, tetramethylene diisocyanate, hexamethylene diisocyanate, dicyclohexylmethane-4,4'-diisocyanate, isophorone diisocyanate, mixtures of phenylmethane-4,4'-diisocyanate, polymethylene polyphenylisocyanate, , 2-isocyanatopropylcyclohexyl isocyanate, dicyclohexylmethane 2,4'-diisocyanate, 1,3-bis(iso-cyanatomethyl)cyclohexane, diisocyanates derived from dimer fatty acids, as sold under the commercial designation DDI 1410 by Henkel, 1,8-diisocyanato-4-isocyanatomethyloctane, 1,7-diisocyanato-4-isocyanato-methylheptane or 1-isocyanato-2-(3-isocyanatopropyl)-cyclohexane, and higher polyisocyanates such as triphenylmethane-4,4',4"-triisocyanate, or mixtures of these polyisocyanates. Suitable polyisocyantes also include polyisocyanates derived from these that containing isocyanurate, biuret, allophanate, iminooxadiazinedione, urethane, urea, carbodiimide, or uretdione groups. Polyisocyanates containing urethane groups, for example, are obtained by reacting some of the isocyanate groups with polyols, such as trimethylolpropane, neopentyl glycol, and glycerol, for example. Diisocyanates used with preference are hexamethylene diisocyanate, isophorone diisocyanate, 2-isocyanatopropylcyclohexyl isocyanate, dicyclohexyl-methane 2,4'-diisocyanate, dicyclohexylmethane 4,4'-diisocyanate or 1,3-bis(isocyanatomethyl)cyclohexane (BIC), diisocyanates derived from dimeric fatty acids, 1,8-diisocyanato-4-isocyanatomethyloctane, 1,7-diisocyanato-4-isocyanatomethylheptane, 1-isocyanato-2-(3-isocyanatopropyl)cyclohexane, 2,4- and/or 2,6-tolylene diisocyanate, 4,4'-diphenylmethane diisocyanate, naphthalene diisocyanate or mixtures of these polyisocyanates.

The isocyanate groups are reacted with a blocking agent. Examples of suitable blocking agents include phenol, cresol, xylenol, epsilon-caprolactam, delta-valerolactam, gamma-butyrolactam, diethyl malonate, dimethyl malonate, ethyl acetoacetate, methyl acetoacetate, alcohols such as methanol, ethanol, isopropanol, propanol, isobutanol, tert-butanol, butanol, glycol monoethers such as ethylene or propylene glycol monoethers, acid amides (e.g. acetoanilide), imides (e.g. succinimide), amines (e.g. diphenylamine), imidazole, urea, ethylene urea, 2-oxazolidone, ethylene imine, oximes (e.g. methylethyl ketoxime), and the like. Further details concerning preparing blocked isocyanates, blocking agents, and their use in electrocoat coating compositions are available from many sources, including Grosse Brinkhaus et al., US Patent Application Publication No. 2011/0094890, incorporated herein in its entirety by reference.

The binder is emulsified in water in the presence of a salting acid. Nonlimiting examples of suitable acids include phosphoric acid, phosphonic acid, propionic acid, formic acid, acetic acid, lactic acid, or citric acid. The salting acid may be blended with the binder, mixed with the water, or both, before the binder is added to the water. The acid is used in an amount sufficient to neutralize at least enough of the ionizable resin groups to impart water-dispersibility to the binder. The ionizable groups may be fully neutralized; however, partial neutralization is usually sufficient to impart the required water-dispersibility. By saying that the resin is at least partially neutralized, we mean that at least one of the saltable groups of the binder is neutralized, and up to all of such groups may be neutralized. The degree of neutralization that is required to afford the requisite water-dispersibility for a particular binder will depend upon its composition, molecular weight of the resins, weight percent of amine-functional resin, and other such factors and can readily be determined by one of ordinary skill in the art through straightforward experimentation.

The binder emulsion is then used in preparing the first disclosed electrocoat coating composition (or bath) that further includes zirconium silicate and a catalyst consisting essentially of bismuth compounds and mixtures of bismuth compounds. Nonlimiting examples of the bismuth compounds include bismuth lactate, bismuth dimethylpropionate, bismuth salicylate, bismuth acetate, bismuth methoxyacetate, bismuth oxalate, bismuth adipate, bismuth tartarate, bismuth propionate, bismuth butyrate, bismuth phthalate, bismuth citrate, bismuth gluconate, bismuth sulfamate, bismuth subnitrate (empirical formula 4(BiNO$_3$(OH)) BiO(OH)), bismuth subsalicylate (empirical formula C$_7$H$_5$O$_4$Bi), bismuth naphthanate, bismuth methylmercaptothiodiazole, bismuth complexes based on amino acids as described in EP 0 927 232 such as bismuth aminocaproic acid, alkanesulfonic acids as described in EP 1 163 302 such as bismuth methane sulfonate, bismuth acetoacetonate, bismuth thiocarbamate, bismuth oxide, and colloidal bismuth. The bismuth compound or compounds are typically used in amounts of about 0.2 to about 5 percent by weight, preferably about 0.5 to about 3 percent by weight, and more preferably about 2 to about 2.5 percent by weight, with the percent by weight in each case being based on total nonvolatile binder weight. Bismuth fatty acid salts are often not preferred in an electrocoat coating composition because they produce oily exudations that can disrupt the film, while inorganic bismuth compounds may be more difficult to disperse.

The electrocoat coating composition further includes zirconium silicate. The zirconium silicate may be included by adding an aqueous dispersion of zirconium silicate as already described. The electrocoat coating composition usually contains one or more pigments or fillers. In various embodiments, the aqueous dispersion of zirconium silicate further includes one or more fillers or pigments and may further include the bismuth compound or compounds. The pigments or fillers and the bismuth compound or compounds are added separately in the case where the aqueous dispersion of zirconium silicate does not include them; the pigments or fillers and the bismuth compound or compounds may be added as aqueous dispersions also, which may be prepared in the same way as the aqueous dispersion of zirconium silicate.

The electrocoat coating composition may include further desired materials such as coalescing aids, antifoaming aids, plasticizers, and other additives. Nonlimiting examples of plasticizers include ethylene or propylene oxide adducts of nonyl phenols, bisphenol A, cresol, or other such materials, or polyglycols based on ethylene oxide and/or propylene oxide. Nonlimiting examples of coalescing solvents include alcohols, glycol ethers, polyols, and ketones. Specific coalescing solvents include monobutyl and monohexyl ethers of ethylene glycol, phenyl ether of propylene glycol, monoalkyl ethers of ethylene glycol such as the monomethyl, monoethyl, monopropyl, and monobutyl ethers of ethylene glycol or propylene glycol; dialkyl ethers of ethylene glycol or propylene glycol such as ethylene glycol dimethyl ether and propylene glycol dimethyl ether; butyl carbitol; diacetone alcohol. The amount of coalescing solvent is not critical and is generally up to 15 percent by weight, preferably about 0.5 to 5 percent by weight based on total weight of the resin solids. Plasticizers can be used at levels of up to 15 percent by weight resin solids.

The electrodeposition coating compositions can contain optional ingredients such as dyes, flow control agents, anticrater additives, plasticizers, wetting agents, surfactants, UV absorbers, HALS compounds, and other light stabilizers, antioxidants, defoamers, thermally curable reactive diluents, antioxidants, emulsifiers, slip additives, adhesion promoters, waxes, siccatives, biocides, matting agents, and so on, in effective amounts. Examples of surfactants and wetting agents include alkyl imidazolines such as those available from Ciba-Geigy Industrial Chemicals as AMINE C® acetylenic alcohols such as those available from Air Products and Chemicals under the tradename SURFYNOL®. Surfactants and wetting agents, when present, typically amount to up to 2 percent by weight resin solids.

The electrocoat coating composition may be produced by mixing and homogenizing the above-described constituents using typical and known mixing methods and apparatus such as stirred tanks, agitator mills, extruders, compounders, Ultraturrax, inline dissolvers, static mixers, micromixers, toothed-wheeled dispersers, pressure release nozzles and/or microfluidizers.

Also disclosed is an aqueous coating composition again having a cathodically electrodepositable binder, the binder has a principal resin and a blocked polyisocyanate crosslinker as already described, in which the coating composition includes zirconium silicate and at least one bismuth compound other than bismuth hydroxide. The coating composition is free of tin compounds and free of bismuth hydroxide. This coating composition may be made in the same way as the first-described electrocoat coating composition and may include catalysts other than bismuth and tin catalysts. The at least one bismuth compound other than bismuth hydroxide may again be a catalyst for the curing reaction of an electrocoat coating electrodeposited from the coating composition

In various methods, a coating of one of the disclosed electrocoat coating compositions is electrodeposited onto a metallic substrate. The substrate may be, as some nonlimiting examples, cold-rolled steel, galvanized (zinc coated) steel, electrogalvanized steel, stainless steel, pickled steel, GALVANNEAL® GALVALUME®, and GALVAN® zinc-aluminum alloys coated upon steel, and combinations of these. Nonlimiting examples of useful non-ferrous metals include aluminum, zinc, magnesium and alloys of these. Following a phosphate pre-treatment, the metallic substrate is placed in the electrocoat coating composition, with the metallic substrate connected as one electrode in an electrical circuit, and a coating is electrodeposited onto the metallic substrate by passing a current through the electrocoat coating composition causing a coating layer to deposit onto the electrically conductive substrate. The electrodeposition coating composition may be applied preferably to a dry film thickness of 10 to 35 μm. The article coated with the composition of the invention may be a metallic automotive part or body. Preferably, the electrically conductive substrate is used as the cathode. After application, the coated article is removed from the electrocoat coating composition bath and rinsed with deionized water. The coating may be cured under appropriate conditions, for example by baking at from about 275° F to about 375° F for between about 15 and about 60 minutes, before applying an additional coating layer over the electrodeposited coating layer.

One or more additional coating layers, such as a spray-applied primer-surfacer, single topcoat layer, or composite color coat (basecoat) and clearcoat layer, may be applied over the electrocoat layer. A single layer topcoat is also referred to as a topcoat enamel. In the automotive industry, the topcoat is typically a basecoat that is overcoated with a clearcoat layer. A primer surfacer and the topcoat enamel or basecoat and clearcoat composite topcoat may be waterborne, solventborne, or a powder coating, which may be a dry powder or an aqueous powder slurry.

The composite coating of the invention may have, as one layer, a primer coating layer, which may also be termed a primer-surfacer or filler coating layer. The primer coating layer can be formed from a solventborne composition, waterborne composition, or powder composition, including powder slurry composition. The primer composition preferably has a binder that is thermosetting, although thermoplastic binders are also known. Suitable thermosetting binders may have self-crosslinking polymers or resins, or may include a crosslinker reactive with a polymer or resin in the binder. Nonlimiting examples of suitable binder polymers or resins include acrylics, polyesters, and polyurethanes. Such polymers or resins may include as functional groups hydroxyl groups, carboxyl groups, anhydride groups, epoxide groups, carbamate groups, amine groups, and so on. Among suitable crosslinkers reactive with such groups are aminoplast resins (which are reactive with hydroxyl, carboxyl, carbamate, and amine groups), polyisocyanates, including blocked polyisocyanates (which are reactive with hydroxyl group and amine groups), polyepoxides (which are reactive with carboxyl, anhydride, hydroxyl, and amine groups), and polyacids and polyamines (which are reactive with epoxide groups). Examples of suitable primer compositions are disclosed, for example, in U.S. Patents No. 7,338,989; 7,297,742; 6,916,877; 6,887,526; 6,727,316; 6,437,036; 6,413,642; 6,210,758; 6,099,899; 5,888,655; 5,866,259; 5,552,487; 5,536,785; 4,882,003; and 4,190,569, each assigned to BASF and each incorporated herein by reference.

The primer coating composition applied over the electrocoat primer may then be cured to form a primer coating layer. The electrocoat primer may be cured at the same time as the primer coating layer in a process known as "wet-on-wet" coating or may be cured before the primer coating composition is applied.

A topcoat composition may be applied over the electrocoat layer or primer coating layer and, preferably, cured to form a topcoat layer. In a preferred embodiment, the electrocoat layer or primer layer is coated with a topcoat applied as a color-plus-clear (basecoat-clearcoat) topcoat. In a basecoat-clearcoat topcoat, an underlayer of a pigmented coating, the basecoat, is covered with an outer layer of a transparent coating, the clearcoat. Basecoat-clearcoat topcoats provide an attractive smooth and glossy finish and generally improved performance. Typically, the basecoat and the clearcoat are cured at the same time.

Crosslinking compositions are preferred as the topcoat layer or layers. Coatings of this type are well-known in the art and include waterborne compositions, solventborne compositions, and powder and powder slurry compositions. Polymers known in the art to be useful in basecoat and clearcoat compositions include, without limitation, acrylics, vinyls, polyurethanes, polycarbonates, polyesters, alkyds, and polysiloxanes. Acrylics and polyurethanes are among preferred polymers for topcoat binders. Thermoset basecoat and clearcoat compositions are also preferred, and, to that end, preferred polymers comprise one or more kinds of crosslinkable functional groups, such as carbamate, hydroxy, isocyanate, amine, epoxy, acrylate, vinyl, silane, acetoacetate, and so on. The polymer may be self-crosslinking, or, preferably, the composition may include a crosslinking agent such as a polyisocyanate or an aminoplast resin. Examples of suitable topcoat compositions are disclosed, for example, in U.S. Patents No 7,375,174; 7,342,071; 7,297,749; 7,261,926; 7,226,971; 7,160,973; 7,151,133; 7,060,357; 7,045,588; 7,041,729; 6,995,208; 6,927,271; 6,914,096; 6,900,270; 6,818,303; 6,812,300; 6,780,909; 6,737,468; 6,652,919; 6,583,212; 6,462,144; 6,337,139; 6,165,618; 6,129,989; 6,001,424; 5,981,080; 5,855,964; 5,629,374; 5,601,879; 5,508,349; 5,502,101; 5,494,970; 5,281,443; and , each assigned to BASF and each incorporated herein by reference.

The further coating layers can be applied to the electrocoat coating layer according to any of a number of techniques well-known in the art. These include, for example, spray coating, dip coating, roll coating, curtain coating, and the like. For automotive applications, the further coating layer or layers are preferably applied by spray coating, particularly electrostatic spray methods. Coating layers of one mil or more are usually applied in two or more coats (passes), separated by a time sufficient to allow some of the solvent or aqueous medium to evaporate, or "flash," from the applied layer. The flash may be at ambient or elevated temperatures, for example, the flash may use radiant heat. The coats as applied can be from 0.5 mil up to 3 mils dry, and a sufficient number of coats are applied to yield the desired final coating thickness.

A primer layer may be cured before the topcoat is applied. The cured primer layer may be from about 0.5 mil to about 2 mils thick, preferably from about 0.8 mils to about 1.2 mils thick.

Color-plus-clear topcoats are usually applied wet-on-wet. The compositions are applied in coats separated by a flash, as described above, with a flash also between the last coat of the color composition and the first coat the clear. The two coating layers are then cured simultaneously. Preferably, the cured basecoat layer is 0.5 to 1.5 mils thick, and the cured clear coat layer is 1 to 3 mils, more preferably 1.6 to 2.2 mils, thick.

Alternatively the primer layer and the topcoat can be applied "wet-on-wet." For example, the primer composition can be applied, then the applied layer flashed; then the topcoat can be applied and flashed; then the primer and the topcoat can be cured at the same time. Again, the topcoat can include a basecoat layer and a clearcoat layer applied wet-on-wet. The primer layer can also be applied to an uncured electrocoat coating layer, and all layers cured together.

The coating compositions described are preferably cured with heat. Curing temperatures are preferably from about 70°C to about 180°C, and particularly preferably from about 170°F to about 200°F for a topcoat or primer composition including an unblocked acid catalyst, or from about 240°F to about 275°F for a topcoat or primer composition including a blocked acid catalyst. Typical curing times at these temperatures range from 15 to 60 minutes, and preferably the temperature is chosen to allow a cure time of from about 15 to about 30 minutes. In a preferred embodiment, the coated article is an automotive body or part.

The following examples illustrate, but do not in any way limit, the scope of the methods and compositions as described and claimed. All parts are parts by weight unless otherwise noted.

Examples

Preparation of Dispersions

Dispersions A-D were prepared with the following compositions. Parts are by weight.

|  | Dispersion A (Bi catalyst and Zr Silicate) | Dispersion B (Bi catalyst Only) | Dispersion C (Zr Silicate Only) | Dispersion D No Catalyst |
|---|---|---|---|---|
| Epoxy Dispersing Resin[1] | 38.80 | 38.80 | 38.80 | 38.80 |
| Water | 10.45 | 10.45 | 10.45 | 10.45 |
| Zr Silicate | 5.86 | 0.00 | 5.86 | 5.86 |
| Bismuth subnitrate | 5.86 | 5.86 | 0.00 | 0.00 |
| Carbon Black | 0.42 | 0.42 | 0.42 | 0.42 |
| Filler Pigments | 312.00 | 312.00 | 312.00 | 312.00 |
| Titanium Dioxide | 327.00 | 332.86 | 332.86 | 332.86 |
|  | 100.00 | 100.00 | 100.00 | 100.00 |
| 1. Aqueous dispersion of an acid-salted amine-functional epoxy resin | | | | |

Preparation of Electrocoat Coating Compositions

|  | 0.16 P/B | | | |
|---|---|---|---|---|
| Phosphate concentration | 0 ppm | 100 ppm | 200 ppm | 300 ppm |
| Water | 53.34 | 52.34 | 51.34 | 50.34 |
| Phosphate Solution[2] | 0.00 | 1.00 | 2.00 | 3.00 |
| Cationic Resin[3] | 41.49 | 41.49 | 41.49 | 41.49 |
| Dispersion A, B, C, or D | 5.17 | 5.17 | 5.17 | 5.17 |
|  | 100.00 | 100.00 | 100.00 | 100.00 |

(continued)

| | 0.24 P/B | | | |
|---|---|---|---|---|
| Phosphate concentration | 0 ppm | 100 ppm | 200 ppm | 300 ppm |
| Water | 54.17 | 53.17 | 52.17 | 51.17 |
| Phosphate Solution[2] | 0.00 | 1.00 | 2.00 | 3.00 |
| Cationic Resin[3] | 39.58 | 39.58 | 39.58 | 39.58 |
| Dispersion A, B, C, or D | 6.25 | 6.25 | 6.25 | 6.25 |
| | 100.00 | 100.00 | 100.00 | 100.00 |

2. The phosphate solution is a commercial phosphate treatment obtained from an automotive assembly plant.
3. 40% Aqueous dispersion of a lactic acid-salted amine-functional epoxy resin having 27% by weight of an acid salted, amine-functional epoxy resin, 12% by weight of a blocked isocyanate crosslinker, and 2% by weight of a plasticizer.

The cure responses of the electrocoat coating compositions were tested by a Gel Fraction Test Method according to the following procedure.

1. Weigh and record the mass of a 1" x 4" phosphated steel coupon (A).
2. Electrocoat coupon and cure at desired cure schedule.
3. Weigh and record the mass of the cured electrocoated coupon (B).
4. Place coupon in a 50/50 mixture of acetone/methanol at reflux.
5. After one hour remove coupon and dry at 105°C for 15 minutes.
6. Weigh and record the mass of the coupon (C).
7. Calculate % Gel Fraction by

$$\frac{C}{B-A} \times 100\%$$

Gel Fraction Results

| Bi/Zr Dispersion, 0.16 P/B | 20' x 310°F | | 20' x 320°F | | 20' x 330°F | | 20' x 340°F | |
|---|---|---|---|---|---|---|---|---|
| | Bi Paste | Bi/Zr Paste | Bi Paste | Bi/Zr Paste | Bi Paste | Bi/Zr Paste | Bi Paste | Bi/Zr Paste |
| 0 ppm Phosphate | 58.5 | 74.4 | 81.8 | 81.9 | 87.3 | 91.0 | 94.0 | 93.7 |
| 100 ppm Phosphate | 28.1 | 41.7 | 54.1 | 58.8 | 66.9 | 77.5 | 83.1 | 82.1 |
| 200 ppm Phosphate | 26.6 | 29.9 | 41.0 | 43.4 | 50.7 | 65.2 | 70.4 | 72.4 |
| 300 ppm Phosphate | 21.9 | 29.1 | 34.3 | 38.2 | 47.0 | 54.2 | 66.8 | 68.8 |

| Bi/Zr Dispersion, 0.24 P/B | 20' x 310°F | | 20' x 320°F | | 20' x 330°F | | 20' x 340°F | |
|---|---|---|---|---|---|---|---|---|
| | Bi Paste | Bi/Zr Paste | Bi Paste | Bi/Zr Paste | Bi Paste | Bi/Zr Paste | Bi Paste | Bi/Zr Paste |
| 0 ppm Phosphate | 70.7 | 83.5 | 89.1 | 90.8 | 90.9 | 93.2 | 93.8 | 95.9 |
| 100 ppm Phosphate | 43.1 | 64.7 | 69.2 | 82.6 | 79.8 | 88.6 | 86.3 | 91.4 |
| 200 ppm Phosphate | 34.0 | 52.3 | 59.2 | 75.7 | 69.3 | 83.8 | 80.0 | 88.9 |
| 300 ppm Phosphate | 33.2 | 49.9 | 52.9 | 74.0 | 67.6 | 82.6 | 78.4 | 88.9 |

| ZrSi as Catalyst | 20' x 310°F | | 20' x 320°F | | 20' x 330°F | | 20' x 340°F | |
|---|---|---|---|---|---|---|---|---|
| | 0.16 P/B | 0.24 P/B | 0.16 P/B | 0.24 P/B | 0.16 P/B | 0.24 P/B | 0.16 P/B | 0.24 P/B |
| 0 ppm Phosphate | 22.0 | 28.4 | 24.9 | 31.2 | 24.3 | 32.6 | 33.5 | 43.8 |
| 100 ppm Phosphate | 24.3 | 31.9 | 22.8 | 29.9 | 27.5 | 32.0 | 31.7 | 43.2 |
| 200 ppm Phosphate | 22.4 | 31.3 | 23.5 | 31.2 | 28.8 | 34.0 | 35.6 | 41.0 |
| 300 ppm Phosphate | 23.4 | 30.9 | 25.9 | 30.4 | 29.8 | 34.6 | 36.2 | 41.1 |

| No Catalyst | 20' x 310°F | | 20' x 320°F | | 20' x 330°F | | 20' x 340°F | |
|---|---|---|---|---|---|---|---|---|
| | 0.16 P/B | 0.24 P/B | 0.16 P/B | 0.24 P/B | 0.16 P/B | 0.24 P/B | 0.16 P/B | 0.24 P/B |
| 0 ppm Phosphate | 19.0 | 25.1 | 21.8 | 27.8 | 21.1 | 28.0 | 35.3 | 41.3 |
| 100 ppm Phosphate | 17.7 | 23.5 | 22.8 | 28.9 | 24.7 | 29.8 | 36.4 | 40.8 |
| 200 ppm Phosphate | 19.9 | 24.4 | 23.4 | 29.6 | 20.9 | 27.7 | 39.2 | 40.4 |
| 300 ppm Phosphate | 21.4 | 24.7 | 22.9 | 25.5 | 24.9 | 30.0 | 36.3 | 42.0 |

These results demonstrate a percentage of complete coating cure. Although a 100% extent of cure is not defined by itself, the numbers represent a comparison to each other and reflect differences in cure between the test samples of the different compositions prepared at each bake.

The description is merely exemplary in nature and, thus, variations that do not depart from the gist of the disclosure are a part of the invention. Variations are not to be regarded as a departure from the spirit and scope of the disclosure

**Claims**

1.   A method of treating an electrocoat coating composition contaminated with phosphate ions, comprising adding zirconium silicate to the coating composition.

2.   An aqueous coating composition comprising a cathodically electrodepositable binder comprising a principal resin and a blocked polyisocyanate crosslinker, wherein the coating composition further comprises zirconium silicate and

(a) a catalyst consisting essentially of a member selected from the group consisting of bismuth compounds and mixtures thereof; or
(b) at least one bismuth compound other than bismuth hydroxide and wherein the coating composition is free of tin compounds and free of bismuth hydroxide.

3. An aqueous coating composition according to claim 2, wherein in alternative (a) the member is one or more of bismuth lactate, bismuth dimethylpropionate, bismuth subnitrate and bismuth subsalicylate; and in alternative (b) the at least one bismuth compound comprises one or more of bismuth octoate, bismuth subnitrate and bismuth subsalicylate.

4. An aqueous coating composition according to claim 2 or claim 3, comprising from about 2.0 to about 4.0 wt% zirconium silicate based on binder weight.

5. A method of coating an electrically conductive substrate, comprising placing the substrate into an aqueous coating composition according to any one of claims 2 to 4; connecting the electrically conductive substrate as an electrode in an electric circuit; and passing a current through the aqueous electrodeposition coating composition to deposit a coating layer onto the electrically conductive substrate.

6. A method according to claim 5, wherein the electrically conductive substrate is connected as a cathode.

7. A method according to claim 6, wherein the electrically conductive substrate is an automotive vehicle body or an automotive part.

**Patentansprüche**

1. Verfahren zur Behandlung einer mit Phosphationen kontaminierten Elektrotauchlack-Beschichtungszusammensetzung, bei dem man Zirconiumsilikat zu der Beschichtungszusammensetzung gibt.

2. Wässrige Beschichtungszusammensetzung, umfassend ein kathodisch abscheidbares Bindemittel, das ein Hauptharz und einen blockierten Polyisocyanat-Vernetzer umfasst, wobei die Beschichtungszusammensetzung ferner Zirconiumsilikat und

(a) einen Katalysator, der im Wesentlichen aus einem Mitglied der Gruppe bestehend aus Bismutverbindungen und Mischungen davon besteht; oder
(b) mindestens eine Bismutverbindung, die von Bismuthydroxid verschieden ist,

umfasst und wobei die Beschichtungszusammensetzung frei von Zinnverbindungen und frei von Bismuthydroxid ist.

3. Wässrige Beschichtungszusammensetzung nach Anspruch 2, wobei bei Alternative (a) das Mitglied Bismutlactat, Bismutdimethylpropionat, Bismutsubnitrat und/oder Bismutsubsalicylat ist und bei Alternative (b) die mindestens eine Bismutverbindung Bismutoctoat, Bismutsubnitrat und/oder Bismutsubsalicylat umfasst.

4. Wässrige Beschichtungszusammensetzung nach Anspruch 2 oder Anspruch 3, umfassend etwa 2,0 bis etwa 4,0 Gew.-% Zirconiumsilikat, bezogen auf das Bindemittelgewicht.

5. Verfahren zum Beschichten eines elektrisch leitfähigen Substrats, bei dem man das Substrat in eine wässrige Beschichtungszusammensetzung nach einem der Ansprüche 2 bis 4 einbringt; das elektrisch leitfähige Substrat als Elektrode in einem Stromkreis schaltet und zur Abscheidung einer Beschichtungsschicht auf dem elektrisch leitfähigen Substrat einen Strom durch die wässrige Elektrotauchlack-Beschichtungszusammensetzung leitet.

6. Verfahren nach Anspruch 5, bei dem das elektrisch leitfähige Substrat als Kathode geschaltet wird.

7. Verfahren nach Anspruch 6, bei dem es sich bei dem elektrisch leitfähigen Substrat um eine Autokarosserie oder ein Autoteil handelt.

**Revendications**

1. Procédé de traitement d'une composition de revêtement par électrodéposition contaminée par des ions phosphate, comprenant l'ajout de silicate de zirconium à la composition de revêtement.

2. Composition aqueuse de revêtement comprenant un liant électrodéposable par voie cathodique comprenant une

EP 2 917 293 B1

résine principale et un agent de réticulation à polyisocyanate bloqué, la composition de revêtement comprenant en outre du silicate de zirconium et

(a) un catalyseur consistant essentiellement en un élément choisi dans le groupe constitué par les composés de bismuth et les mélanges de ceux-ci ; ou

(b) au moins un composé de bismuth différent de l'hydroxyde de bismuth et la composition de revêtement étant dépourvue de composés d'étain et dépourvue d'hydroxyde de bismuth.

3. Composition aqueuse de revêtement selon la revendication 2, dans laquelle dans la variante (a) l'élément est un ou plusieurs éléments parmi le lactate de bismuth, le diméthylpropionate de bismuth, le sous-nitrate de bismuth et le sous-salicylate de bismuth ; et dans la variante (b) l'au moins un composé de bismuth comprend un ou plusieurs composés parmi l'octoate de bismuth, le sous-nitrate de bismuth et le sous-salicylate de bismuth.

4. Composition aqueuse de revêtement selon la revendication 2 ou la revendication 3, comprenant environ 2,0 à environ 4,0 % en poids de silicate de zirconium, rapporté au poids du liant.

5. Procédé de revêtement d'un substrat électriquement conducteur, comprenant le positionnement du substrat dans une composition aqueuse de revêtement selon l'une quelconque des revendications 2 à 4 ; le branchement du substrat électriquement conducteur en tant qu'électrode dans un circuit électrique ; et le passage d'un courant à travers la composition aqueuse de revêtement par électrodéposition pour déposer une couche de revêtement sur le substrat électriquement conducteur.

6. Procédé selon la revendication 5, dans lequel le substrat électriquement conducteur est branché en tant que cathode.

7. Procédé selon la revendication 6, dans lequel le substrat électriquement conducteur est une carrosserie de véhicule automobile ou une pièce d'automobile.

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5868820 A
- US 5330839 A, Yasuoka
- EP 1046683 A, Hiraki
- US 7625477 B, Kawaraya
- WO 2006058782 A1
- EP 1420086 A1
- WO 0039177 A
- US 5527614 A, Carpenter
- US 5536776 A
- US 6951602 B, Rueter
- US 6288176 B, Hsieh
- US 6174422 B, Hönig
- US 20110005937 A, Zawacky
- US 4769400 A, Geist
- US 20110094890 A, Grosse Brinkhaus
- EP 0927232 A
- EP 1163302 A
- US 7338989 B
- US 7297742 B
- US 6916877 B
- US 6887526 B
- US 6727316 B
- US 6437036 B
- US 6413642 B
- US 6210758 B
- US 6099899 A
- US 5888655 A
- US 5866259 A
- US 5552487 A
- US 5536785 A
- US 4882003 A
- US 4190569 A
- US 7375174 B
- US 7342071 B
- US 7297749 B
- US 7261926 B
- US 7226971 B
- US 7160973 B
- US 7151133 B
- US 7060357 B
- US 7045588 B
- US 7041729 B
- US 6995208 B
- US 6927271 B
- US 6914096 B
- US 6900270 B
- US 6818303 B
- US 6812300 B
- US 6780909 B
- US 6737468 B
- US 6652919 B
- US 6583212 B
- US 6462144 B
- US 6337139 B
- US 6165618 A
- US 6129989 A
- US 6001424 A
- US 5981080 A
- US 5855964 A
- US 5629374 A
- US 5601879 A
- US 5508349 A
- US 5502101 A
- US 5494970 A
- US 5281443 A